# FASCICULE DE BREVET EUROPEEN

(11) **EP 1 963 181 B1**
(45) Date de publication et mention de la délivrance du brevet: **13.05.2009**
(21) Numéro de dépôt: 06842110.6
(22) Date de dépôt: 07.12.2006
(51) Int. Cl.: B64D 11/00, B64D 25/00

(54) **DISPOSITIF DE FOURNITURE D'OXYGENE A DES OCCUPANTS D'UN AERONEF ET ORGANE DE REGULATION DE PRESSION POUR UN TEL DISPOSITIF**
VORRICHTUNG ZUR ZUFUHR VON SAUERSTOFF FÜR DIE INSASSEN EINES FLUGZEUGS UND DRUCKREGULATOR FÜR EINE SOLCHE VORRICHTUNG
DEVICE FOR SUPPLYING OXYGEN TO THE OCCUPANTS OF AN AIRCRAFT AND PRESSURE REGULATOR FOR SUCH A DEVICE

(30) Priorité: 14.12.2005 FR 0553861
(43) Date de publication de la demande: 03.09.2008
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LESSI, Stéphane, Newark, Delaware 26711 (US); ARNAULT, Jean, F-38330 Saint Nazaire Les Eymes (FR); CAZENAVE, Jean-Michel, F-38180 Seyssins (FR)
(74) Mandataire: De Cuenca, Emmanuel Jaime
(86) Numéro de dépôt international: PCT/FR2006/051299
(87) Numéro de publication internationale: WO 2007/068845

(56) Documents cités:
- DE-C- 504 376
- FR-A- 2 858 560
- US-A- 2 934 293
- US-A- 5 165 625
- US-A- 5 199 423

## Description

La présente invention concerne un dispositif de fourniture d'oxygène à des occupants d'un aéronef ainsi qu'un organe de régulation de pression pour un tel dispositif.

L'invention concerne en particulier un dispositif de fourniture d'oxygène à des occupants d'un aéronef comprenant une source d'oxygène à une première pression dite élevée, une première ligne de fourniture d'oxygène à une seconde pression dite intermédiaire, des premiers moyens de détente/régulation de l'oxygène provenant de la source à la seconde pression intermédiaire, pour alimenter la première ligne de fourniture d'oxygène, une seconde ligne de fourniture d'oxygène à une troisième pression dite basse, des seconds moyens de détente/régulation de l'oxygène provenant de la source à la troisième pression, pour alimenter la seconde ligne de fourniture d'oxygène.

Les systèmes de fourniture d'oxygène de secours employés à bords des aéronefs peuvent comporter un certain nombre de bouteilles d'oxygène gazeux sous haute pression (typiquement sous une pression nominale comprise entre 120 et 200 bars). En cas de dépressurisation de la cabine de l'aéronef, l'oxygène est délivré aux passagers au travers de lignes de distribution. L'oxygène délivré est régulé au moyen d'une part d'un premier détendeur disposé en tête de bouteille pour convertir la haute pression en une pression intermédiaire (typiquement entre 5 et 8 bars) puis, d'autre part, au moyen d'une vanne de régulation de pression pour convertir la pression intermédiaire en une basse pression (typiquement entre 0,5 et 5 bars relatifs).

On connaît des vannes de régulation de pression pneumatiques pour convertir la pression intermédiaire en une basse pression. Ces vannes pneumatiques ne permettent cependant pas de réaliser une régulation précise du débit d'oxygène fourni aux passagers en fonction de l'altitude. Ceci conduit à une surconsommation d'oxygène.

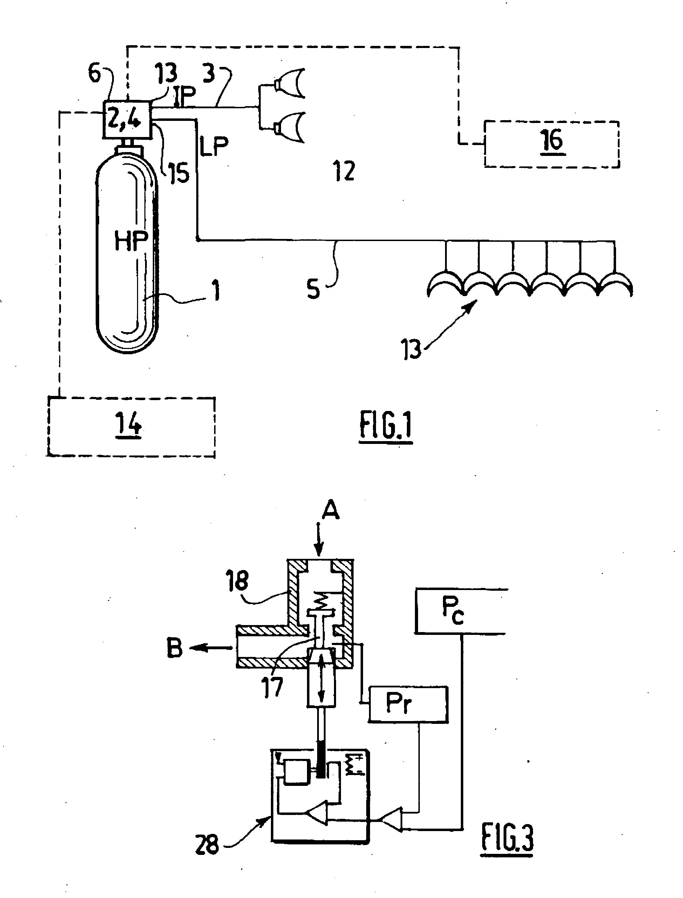

On connaît également des organes de régulation électroniques. La figure 3 illustre schématiquement un tel régulateur de pression comprenant un clapet 17 mobile dans un conduit 18 pour réguler la pression d'un gaz entre une partie amont A provenant d'une bouteille sous pression et une partie aval B. La position du clapet 1 mobile est commandée par un module 28 électronique en fonction de la pression réelle Pr mesurée dans le conduit 18 et d'une pression de consigne Pc.

De tels organes de régulation, permettant d'optimiser la quantité d'oxygène délivrée aux passagers, par une régulation précise du débit d'oxygène fourni en fonction de l'altitude de l'aéronef, sont décrits notamment dans les documents FR2 858 560 A1 et EP-A-499505.

En général les circuits d'oxygène de secours précités comportent également des masques à mise en place rapide destinés à l'équipage de l'aéronef. Ces masques à mise en place rapide disposent en général de leur propre régulateur de pression et de ce fait doivent être alimentés par une ligne d'alimentation en oxygène à la pression intermédiaire.

Les masques de secours destinés aux passagers sont du type à débit continu et ne possèdent pas de régulateurs de pression. De ce fait, les masques destinés aux passagers doivent être alimentés par une ligne d'alimentation en oxygène à la pression basse. La ligne d'alimentation des masques pour les passagers est en général constituée d'une dérivation de la ligne d'alimentation pour les masques à mise en place rapide. Cette dérivation comprend les moyens de régulation de pression pneumatiques ou électroniques.

Les architectures connues nécessitent ainsi de prévoir plusieurs tronçons de lignes d'alimentation en oxygène à la pression intermédiaire et une pluralité d'équipements associés (régulateurs de pression). De ce fait, ces circuits connus présentent des risques en terme de sécurité et ont une structure complexe et coûteuse.

Un but de la présente invention est de pallier tout ou partie des inconvénients de l'art antérieur relevés ci-dessus.

A cette fin, le dispositif de fourniture d'oxygène à des occupants d'un aéronef selon l'invention, par ailleurs conforme à la définition générique qu'en donne le préambule ci-dessus, est essentiellement caractérisé en ce que les premiers et seconds moyens de détente/régulation sont disposés au sein d'un même organe de régulation.

Par ailleurs, l'invention peut comporter l'une ou plusieurs des caractéristiques suivantes :
- le dispositif comporte des moyens de coupure de l'alimentation en oxygène vers la première et/ou la seconde ligne de fourniture d'oxygène, tels qu'une vanne manuelle, et en ce que les moyens de coupure de l'alimentation sont disposés au sein de l'organe de régulation.
- les seconds moyens de détente/régulation de l'oxygène comportent une vanne de régulation motorisée commandée électriquement.
- la vanne de régulation motorisée commandée électriquement est conformée pour permettre une régulation de pression et/ou de débit d'oxygène dans la seconde ligne en fonction d'une information représentative d'une altitude.
- le dispositif comporte au moins l'un des capteurs suivants : un capteur d'altitude, un capteur mesurant la pression d'oxygène à la sortie de source et en amont des moyens de détente/régulation, un capteur de température, un capteur mesurant la pression d'oxygène en aval des seconds moyens de détente/régulation, et en ce que ou moins une partie du ou des capteurs est disposée au sein de l'organe de régulation.
- les premiers moyens de détente/régulation comportent un détendeur de type pneumatique.
- l'organe de régulation est disposé à proximité et de préférence connecté directement sur la source d'oxygène.
- le dispositif comporte au moins un masque à mise en place rapide connecté à la première ligne de fourniture d'oxygène et au moins un masque pour un passager connecté à la seconde ligne de fourniture d'oxygène.
- l'organe de régulation comprend une ligne de régulation pourvue d'une entrée connectée à la source d'oxygène à haute pression (HP), les premiers et seconds moyens de détente étant disposés en série sur la ligne de régulation et en amont d'une sortie basse pression raccordée à la seconde ligne de fourniture d'oxygène, et ce que la ligne de régulation comprend une dérivation raccordée entre les premiers et seconds moyens de détente et une sortie à la pression intermédiaire, la sortie à la pression intermédiaire étant connectée à la première ligne de fourniture d'oxygène.

D'autres particularités et avantages apparaîtrons à la lecture de la description ci-après, faite en référence aux figures dans lesquelles :
- la figure 1 représente une vue schématique illustrant un exemple de réalisation du dispositif de fourniture d'oxygène selon l'invention,
- la figure 2 représente un détail de la figure 1 illustrant schématiquement la structure et le fonctionnement d'un organe de régulation selon l'invention.
- la figure 3 représente schématiquement une vanne de régulation de pression motorisée.

On reconnaît à la figure 1, une source d'oxygène gazeux symbolisée par une bouteille 1 (bien entendu l'invention peut s'appliquer à une source comprenant plusieurs bouteilles ou tout autre moyen équivalent). La source 1 contient de l'oxygène gazeux à une pression élevée, par exemple entre 120 et 200 bars.

Un organe 6 de régulation décrit plus en détail ci-après est relié à la sortie de la bouteille 1.

Une première ligne 3 de fourniture d'oxygène est connectée à une première sortie 13 de l'organe 6 de régulation. La première ligne 3 est destinée à alimenter en oxygène des premiers consommateurs, par exemple au moins un masque 12 à mise en place rapide. La première ligne 3 de fourniture d'oxygène est prévue pour acheminer de l'oxygène aux masques 12 à une pression intermédiaire IP délivrée par l'organe 6 de régulation à partir de la bouteille 1.

Le circuit comporte une seconde ligne 5 de fourniture d'oxygène connectée à une seconde sortie 15 de l'organe 6 de régulation.

La seconde ligne 5 est destinée à alimenter en oxygène des seconds consommateurs 13, par exemple au moins un masque 13 pour passager. La seconde ligne 5 de fourniture d'oxygène est prévue pour acheminer de l'oxygène aux masques 13 passagers à une pression basse LP (par exemple entre 0,5 et 5 bars relatifs). L'oxygène à la pression basse LP est délivré par l'organe 6 de régulation à partir de la bouteille 1.

L'organe 6 de régulation comprend des premiers 2 et seconds 4 moyens de détente/régulation permettant d'alimenter la première ligne 3 en oxygène à la pression intermédiaire IP et la seconde ligne 5 en oxygène à la pression basse LP.

De préférence et comme décrits plus en détail ci-après, l'organe 6 de régulation comprend des moyens électroniques. A cet effet, l'organe 6 de régulation est alimenté par une source électrique 14. De plus, l'organe 6 de régulation peut être associé à des moyens 16 d'affichage et/ou de commande.

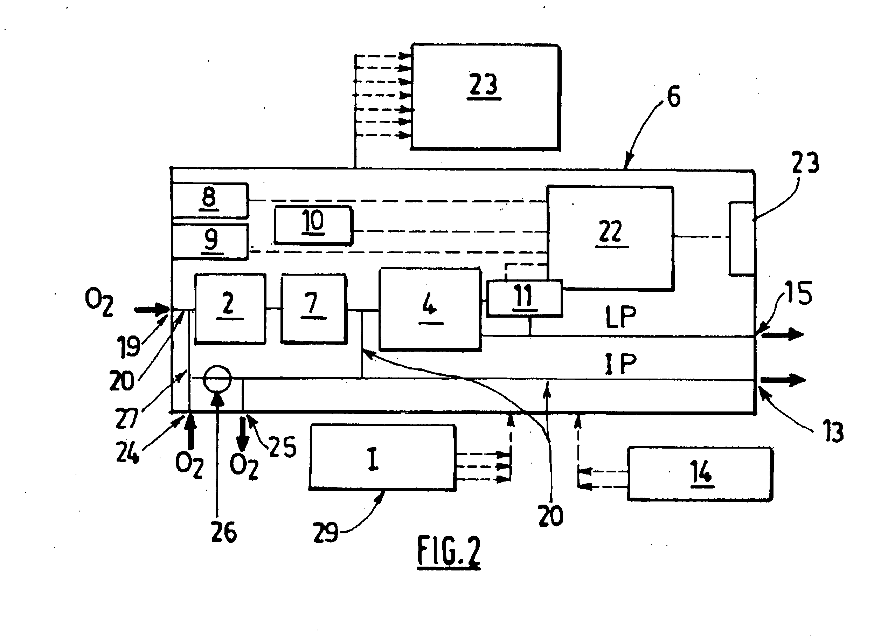

En se référant à présent à la figure 2, l'organe 6 de régulation comprend une entrée 19 d'une ligne 20 de régulation destinée à être alimentée en oxygène à haute pression HP provenant de la source 1. En aval de l'entrée 19, la ligne 20 de régulation de l'organe 6 comprend des premiers moyens 2 de détente comportant de préférence un détendeur haute pression prévu pour détendre l'oxygène à une pression intermédiaire IP. Le détendeur 2 haute pression est de préférence un détendeur pneumatique mais bien entendu tout autre type de détendeur/régulateur peut être envisagé, tel qu'un régulateur électronique. En aval du détendeur 2 haute pression, la ligne 20 de régulation de l'organe 6 comprend une vanne 7, de préférence manuelle, destinée à permettre la coupure de l'alimentation en oxygène.

En aval de la vanne 7 de coupure, l'organe 6 de régulation comporte une vanne 4 de régulation motorisée commandée électriquement conformée pour permettre une régulation de pression et/ou de débit d'oxygène en fonction de l'altitude de l'aéronef. En aval de la vanne 4 de régulation motorisée, la ligne 20 de régulation comprend une sortie 15 basse pression LP destinée à être connectée à la seconde ligne 5 de fourniture d'oxygène.

Entre la vanne 7 de coupure et la vanne 4 de régulation motorisée, la ligne 20 de régulation comprend une dérivation 120 aval vers une sortie 13 à la pression intermédiaire IP. Cette sortie 13 est destinée à être reliée la première ligne 3 de fourniture d'oxygène pour alimenter la première ligne 3 en oxygène à la pression intermédiaire IP.

Pour permettre notamment le pilotage de la vanne 4 de régulation motorisée, l'organe 6 de régulation comporte une électronique 22 de commande reliée à un altimètre 8 et un capteur 11 mesurant la pression d'oxygène en aval de la vanne 4 de régulation motorisée.

Un capteur de température 10 et un capteur 9 mesurant la pression d'oxygène en amont du détendeur haute pression 2 sont également reliés à l'électronique 22 de commande pour mesurer la pression haute HP de façon à compenser la mesure de pression en température, pour connaître exactement la quantité de gaz disponible.

L'électronique 22 de commande peut être reliée à une prise de connexion d'un appareil 23 de diagnostique.

En amont du détendeur 2 haute pression, une dérivation 27 amont est prévue vers une entrée 24 (ou prise de remplissage d'oxygène à haute pression) et une sortie 25 de sécurité (pour permettre une décharge d'oxygène). Entre les entrée 24 et sortie 25, la dérivation 27 amont comporte un organe de sécurité 26 tel qu'un disque apte à se briser lorsqu'il est soumis à une pression limite pour ménager une ouverture vers la sortie 25 de décharge. En aval, la dérivation 27 amont rejoint la dérivation 20 aval.

L'organe 6 de régulation est alimentée par une source électrique 14 et peut coopérer avec un module 29 de commande délivrant des instructions I de fonctionnement (« ouvert » ; « fermé ») correspondant respectivement à :
o Ouvert = l'organe 6 de régulation est prêt à fonctionner en cas de détection d'une décompression ou est en cours de fonctionnement (délivre de l'oxygène en aval dans le circuit 5.
o Fermé = l'organe 6 de régulation est commandé en fermeture et isole la distribution de gaz vers le circuit 5. Seul le circuit 3 est alimenté.

Enfin, l'organe 6 de régulation peut comporter ou être associé à un module 23 de sortie apte à générer des informations telles que :
- l'absence d'erreur dans le fonctionnement du dispositif
- le dispositif est actif/inactif
- la vanne manuelle est totalement fermée
- une position fermée sélectionnée de l'organe 6 de régulation
- la pression de remplissage en oxygène
- une alerte en raison d'une pression d'oxygène trop basse

La vanne de régulation 4 est apte à envoyer un pic de pression pour mettre en service les masques 13 passagers (via une ouverture automatique de boîtier à masques) lors de la détection d'une décompression dans la cabine. Avantageusement, la vanne de régulation 4 peut être conformée pour pouvoir être testée quant à son bon fonctionnement.

Ainsi, tout en étant de structure simple et peu coûteuse par rapport aux systèmes connus, le dispositif selon l'invention permet une fourniture optimale d'oxygène à différentes pressions (IP, LP) aux appareils de secours d'un aéronef.

L'intégration de l'ensemble des fonctions de régulation de pression d'oxygène (intermédiaire IP et basse LP) au sein d'un même équipement 6 permet de diminuer voir de supprimer des lignes d'oxygène à la pression intermédiaire IP dans certains appareils. De plus, le dispositif selon l'invention permet une simplification de l'architecture de fourniture d'oxygène de secours et de sa maintenance. De plus, le dispositif selon l'invention permet d'intégrer dans un même équipement les fonctions de régulation de pression d'oxygène de secours nécessaires tant pour les aéronefs de type civils que les aéronefs d'affaire.

Selon une variante envisageable, une ligne de by-pass de sécurité (dérivation) peut être prévue pour permettre de court-circuiter la vanne 4 pour alimenter les masques en cas de défaillance de la vanne 4.

## Revendications

1. Dispositif de fourniture d'oxygène à des occupants d'un aéronef comprenant une source (1) d'oxygène à une première pression (HP) dite élevée, une première ligne (3) de fourniture d'oxygène à une seconde pression dite intermédiaire (IP), des premiers moyens (2) de détente/régulation de l'oxygène provenant de la source (1) à la seconde pression intermédiaire (IP), pour alimenter la première ligne (3) de fourniture d'oxygène, une seconde ligne (5) de fourniture d'oxygène à une troisième pression dite basse (LP), des seconds moyens (4) de détente/régulation de l'oxygène provenant de la source (1) à la troisième pression (LP), pour alimenter la seconde ligne (5) de fourniture d'oxygène, **caractérisé en ce que** les premiers (2) et seconds (4) moyens de détente/régulation sont disposés au sein d'un même organe (6) de régulation.

2. Dispositif selon la revendication 1, **caractérisé en ce qu'**il comporte des moyens (7) de coupure de l'alimentation en oxygène vers la première (3) et/ou la seconde ligne (5) de fourniture d'oxygène, tels qu'une vanne manuelle, et **en ce que** les moyens (7) de coupure de l'alimentation sont disposés au sein de l'organe (6) de régulation.

3. Dispositif selon la revendication 1 ou 2, **caractérisé en ce que** les seconds moyens (4) de détente/régulation de l'oxygène comportent une vanne de régulation motorisée commandée électriquement.

4. Dispositif selon la revendication 3, **caractérisé en ce que** la vanne de régulation motorisée commandée électriquement est conformée pour permettre une régulation de pression et/ou de débit d'oxygène dans la seconde ligne (5) en fonction d'une information représentative d'une altitude.

5. Dispositif selon la revendication 3 ou 4, **caractérisé en ce qu'**il comporte au moins l'un des capteurs suivants : un capteur d'altitude (8), un capteur (9) mesurant la pression d'oxygène à la sortie de source (1) et en amont des moyens (2, 4) de détente/régulation, un capteur de température (10), un capteur (11) mesurant la pression d'oxygène en aval des seconds (4) moyens de détente/régulation, et **en ce que** ou moins une partie du ou des capteurs est disposée au sein de l'organe (6) de régulation.

6. Dispositif selon l'une quelconque des revendications précédentes, **caractérisé en ce que** les premiers moyens (2) de détente/régulation comportent un détendeur de type pneumatique.

7. Dispositif selon l'une quelconque des revendications précédentes, **caractérisé en ce que** l'organe (6) de régulation est disposé à proximité et de préférence connecté directement sur la source (1) d'oxygène.

8. Dispositif selon l'une quelconque des revendications précédentes, **caractérisé en ce qu'**il comporte au moins un masque à mise en place rapide connecté à la première ligne (3) de fourniture d'oxygène et au moins un masque (13) pour un passager connecté à la seconde ligne (5) de fourniture d'oxygène.

9. Dispositif selon l'une quelconque des revendications précédentes, **caractérisé en ce que** l'organe (6) de régulation comprend une ligne (20) de régulation pourvue d'une entrée (19) connectée à la source d'oxygène à haute pression (HP), les premiers (2) et seconds (4) moyens de détente étant disposés en série sur la ligne (20) de régulation et en amont d'une sortie (15) basse pression raccordée à la seconde ligne (5) de fourniture d'oxygène, et ce que la ligne (20) de régulation comprend une dérivation (120) raccordée entre les premiers (2) et seconds (4) moyens de détente et une sortie (13) à la pression intermédiaire , la sortie (13) à la pression intermédiaire étant connectée à la première ligne (3) de fourniture d'oxygène.

10. Organe de régulation de pression pour dispositif de fourniture d'oxygène à des occupants d'un aéronef comprenant, intégrés dans un même module, des premiers (2) et des seconds (4) moyens de détente/régulation destinés à détendre/réguler de l'oxygène provenant d'une la source (1) d'oxygène à haute pression, les premiers (2) moyens de détente/régulation étant conformés pour assurer une détente de l'oxygène à une pression intermédiaire (IP), les seconds moyens (4) de détente/régulation comportant des moyens motorisés commandés électriquement pour permettre une régulation de pression et/ou de débit d'oxygène à une pression dite basse en fonction d'une information représentative d'une altitude.

## Claims

1. Device for supplying oxygen to occupants of an aircraft, comprising an oxygen source (1) at a first pressure (HP) known as a high pressure, a first oxygen supply line (3) at a second pressure known as an intermediate pressure (IP), first means (2) for expanding/regulating the oxygen from the source (1) to the second intermediate pressure (IP), to feed the first oxygen supply line (3), a second oxygen supply line (5) at a third pressure known as a low pressure (LP), second means (4) for expanding/regulating the oxygen from the source (1) to the third pressure (LP) to feed the second oxygen supply line (5), **characterized in that** the first (2) and second (4) expanding/regulating means are placed within one and the same regulator (6).

2. Device according to Claim 1, **characterized in that** it comprises means (7) for cutting off the oxygen feed to the first (3) and/or the second (5) oxygen supply line, such as a manual valve, and **in that** the means (7) for cutting off the feed are placed within the regulator (6).

3. Device according to either of Claims 1 and 2, **characterized in that** the second means (4) for expanding/regulating the oxygen comprise an electrically-controlled mechanized regulating valve.

4. Device according to Claim 3, **characterized in that** the electrically-controlled mechanized regulating valve is conformed for regulating a pressure and/or an oxygen flow into the second line (5) according to data representative of an altitude.

5. Device according to either of Claims 3 and 4, **characterized in that** it comprises at least one of the following sensors: altitude sensor (8), a sensor (9) for measuring the oxygen pressure at the outlet of the source (1) and upstream of the expanding/regulating means (2, 4), a temperature sensor (10), a sensor (11) for measuring the oxygen pressure downstream of the second expanding/regulating means (4), and **in that** at least a part of the sensor or sensors is placed within the regulator (6).

6. Device according to any one of the preceding claims, **characterized in that** the first expanding/regulating means (2) comprise a pneumatic expansion valve.

7. Device according to any one of the preceding claims, **characterized in that** the regulator (6) is placed close to and is preferably connected directly to the oxygen source (1).

8. Device according to any one of the preceding claims, **characterized in that** it comprises at least one quick installation mask connected to the first oxygen supply line (3) and at least one passenger mask (13) connected to the second oxygen supply line (5).

9. Device according to any one of the preceding claims, **characterized in that** the regulator (6) comprises a regulating line (20) provided with an inlet (19) connected to the high pressure (HP) oxygen source, the first (2) and second (4) expanding means being placed in series on the regulating line (20) and upstream of a low pressure outlet (15) connected to the second oxygen supply line (5), and **in that** the regulating line (20) comprises a branch line (120) connected between the first (2) and second (4) expanding means and an outlet (13) at the intermediate pressure, the outlet (13) at the intermediate pressure being connected to the first oxygen supply line (3).

10. Pressure regulator for a device supplying oxygen to occupants of an aircraft comprising, integrated in one and the same module, first (2) and second (4) expanding/regulating means for expanding/regulating the oxygen issuing from the high pressure oxygen source (1), the first (2) expanding/regulating means being conformed for expanding the oxygen to an intermediate pressure (IP), the second expanding/regulating means (4) comprising electrically-controlled mechanized means for regulating the pressure and/or flow rate of oxygen to a pressure known as a low pressure according to data representative of an altitude.

## Patentansprüche

1. Vorrichtung zur Zufuhr von Sauerstoff für die Insassen eines Flugzeugs, die eine Sauerstoffquelle (1) mit einem ersten Druck, Hochdruck (HP) genannt, eine erste Sauerstoffzuführleitung (3) mit einem zweiten Druck, Zwischendruck (IP) genannt, erste Mittel (2) zum Druckmindern/Regeln des Sauerstoffs, der von der Quelle (1) mit dem zweiten Zwischendruck (IP) stammt, um die erste Sauerstoffzuführleitung (3) zu versorgen, eine zweite Sauerstoffzuführleitung (5) mit einem dritten Druck, Niederdruck (LP) genannt, zweite Mittel (4) zum Druckmindern/Regeln des Sauerstoffs, der von der Quelle (1) mit dem dritten Druck (LP) stammt, um die zweite Sauerstoffzuführleitung (5) zu versorgen, ausweist, **dadurch gekennzeichnet, dass** die ersten (2) und zweiten (4) Druckminder-/Regelmittel innerhalb eines gleichen Regelorgans (6) angeordnet sind.

2. vorrichtung nach Anspruch 1, **dadurch gekennzeichnet**, das sie Mittel (7) zum Unterbrechen der Sauerstoffzufuhr zu des ersten (3) und/oder zweiten Sauerstoffzuführleitung (5) aufweist, wie zum Beispiel ein manuelles Ventil, und dass die Mittel (7) zum Unterbrechen der Zufuhr innerhalb des Regelorgans (6) angeordnet sind.

3. Vorrichtung nach Anspruch 1 oder 2, **dadurch gekennzeichnet, dass** die zweiten Druckminder-/Regelmittel (4) des Sauerstoffs ein elektrisch gesteuertes motorisiertes Regelventil aufweisen.

4. Vorrichtung nach Anspruch 3, **dadurch gekennzeichnet, dass** das elektrisch gesteuerte motorisierte Regelventil ausgebildet ist, um ein druckregeln und/oder Regeln des Sauerstoffdurchsatzes in der zweiten Leitung (5) in Abhängigkeit von einer Information, die für eine Seehöhe repräsentativ ist, zu erlauben.

5. Vorrichtung nach Anspruch 3 oder 4, **dadurch gekennzeichnet, dass** sie mindestens einen der folgenden Sensoren Aufweist: einen Höhensensor (8), einen Sensor (9), der den Sauerstoffdruck am Ausgang der Quelle (1) und stromaufwärts der Druckminder /Regelmittel (2, 4) misst, einen Temperatursensor (10), einen Sensor (11), der den Sauerstoffdruck stromabwärts der zweiten Druckminder-/Regelmittel (4) misst, und dass mindestens ein Teil des Sensors oder der Sensoren innerhalb des Regelorgans (6) angeordnet ist.

6. Vorrichtung nach einem der vorhergehenden Ansprüche, **dadurch gekennzeichnet, dass** die ersten Druckminder-/Regelmittel (2) einen pneumatischen Druckminderer auf weisen.

7. Vorrichtung nach einem der vorhergehenden Ansprüche, **dadurch gekennzeichnet, dass** das Regelorgan (6) in der Nähe der Sauerstoffquelle (1) angeordnet und bevorzugt direkt mit dieser verbunden ist.

8. Vorrichtung nach einem der vorhergehenden Ansprüche, **dadurch gekennzeichnet, dass** sie mindestens eine Maske zum schnellen Anlegen aufweist, die an die erste sauerstoffzuführleitung (3) angeschlossen ist, und mindestens eine Maske (13) für einen Passagier, die an die zweite Sauerstoffzuführleitung (5) angeschlossen ist.

9. Vorrichtung nach einem der vorhergehenden Anspruche, **dadurch gekennzeichnet, dass** das Regelorgan (6) eine Regelleitung (20) aufweist, die mit einem Eingang (19) versehen ist, der an die Sauerstoffquelle mit Hochdruck (HP) angeschlossen ist, wobei die ersten (2) und zweiten (4) Druckmindermittel in Serie auf der Regelleitung (20) und stromaufwärts eines Niederdruckausgangs (15), der an die zweite Sauerstoffzuführleitung (5) angeschlossen ist, angeordnet sind, und dass die Regelleitung (20) eine Abzweigung (110) aufweist, die zwischen den ersten (2) und den zweiten Druckmindermitteln (4) angeschlossen ist, und einen Ausgang (13) mit dem Zwischendruck, wobei der Ausgang (13) mit dem Zwischendruck an die erste Sauerstoftzuführleitung (3) angeschlossen ist.

10. Druckregelorgan für Vorrichtung zum Zuführen von Sauerstoff für die Insassen eines Flugzeugs, die, in ein gleiches Modul integriert, erste (2) und zweite (4) Druckminder-/Regelmittel aufweist, die dazu bestimmt sind, den Sauerstoff, der von einer Sauerstoffquelle (1) mit Hochdruck kommt, druckzumindern/regeln, wobei die ersten Druckminder-/Regelmitte1 (2) ausgebildet sind, um ein Entspannen des Sauerstoffs auf einen Zwischendruck (IP) sicherzustellen, wobei die zweiten Druckminder-/Regelmittel (4) elektrisch gesteuerte motorisierte Mittel aufweisen, um ein Regeln des Drucks und/oder des Sauerstoffdurchsatzes auf einen sogenannten Niederdruck in Abhängigkeit von einer Information, die für eine Seehöhe repräsentativ ist, zu erlauben.
